(19) Europäisches Patentamt
European Patent Office
Office européen des brevets

(11) **EP 1 820 814 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
*C08G 63/183* (2006.01)     *C08G 63/85* (2006.01)
*C08G 63/78* (2006.01)     *B01J 19/18* (2006.01)

(21) Anmeldenummer: **06001462.8**

(22) Anmeldetag: **24.01.2006**

(54) **Verfahren zur Veresterung von Terephthalsäure mit Butandiol, Verfahren zur Herstellung von Polybutylenterephthalat und Vorrichtung dafür**

Method for esterification of terephthalic acid with butanediol, method for the preparation of polybutylene terephthalate and a device therefore

Procédé pour l'estérification d'acide téréphthalique avec le butanediol, procédé pour la préparation de téréphthalate de polybutylène et un dispositif

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**22.08.2007 Patentblatt 2007/34**

(73) Patentinhaber: **Lurgi Zimmer GmbH 60295 Frankfurt am Main (DE)**

(72) Erfinder:
• **Wilhelm, Fritz 61184 Karben (DE)**

• **Reisen, Michael 60316 Frankfurt (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
**WO-A-02/098947     DE-A1- 19 537 930
US-A1- 2003 069 339     US-B1- 6 812 321**

**Beschreibung**

Die vorliegende Erfindung betrifft ein Verfahren zur Veresterung von Terephthalsäure mit Butandiol, ein Verfahren zur Herstellung von Polybutylenterephthalat sowie Vorrichtungen, geeignet für diese Verfahren.

Die Herstellung von Polybutylenterephthalat (PBT) aus Terephthalsäure (TPA) und 1,4-Butandiol (BD) ist aus dem Stand der Technik bekannt.

Die Herstellung von PBT erfolgt im Stand der Technik üblicherweise in einem dreistufigen kontinuierlichen Verfahren. Dabei wird in einer ersten Reaktionsstufe, der so genannten Veresterungsstufe wird TPA mit BD und parallel gebildeten Hydroxibutylgruppen verestert. Das Veresterungsprodukt wird anschließend in einer zweiten Reaktionsstufe, der so genannten Vorpolykondensationsstufe einer ersten Polykondensation unterworfen. In der abschließenden, dritten Stufe, der Polykondensationsstufe erfolgt schließlich eine weitere Polykondensation zum endgültigen mittel- bis hochviskosen Produkt.

Derartige Verfahren sind beispielsweise aus der US 6,590,062 B2 sowie der US 6,359,106 B1 bekannt. In den dort beschriebenen Verfahren wird in der ersten Veresterungsstufe TPA mit BD zu einem oligomeren Veresterungsprodukt mit einem Zahlenmittel des Polykondensationsgrades von 2 bis 5 umgesetzt. Anschließend erfolgt eine übliche Weiterverarbeitung durch Kondensationsreaktionen.

Ähnliche Verfahren sind auch in den US-Schriften US 4,680,376 sowie US 5,015,759 offenbart. Diese Druckschriften beinhalten, dass der TPA-Umsatz in der Veresterungsstufe, bzw. der Veresterungsgrad der TPA üblicherweise 95 % beträgt.

Die EP 0 869 141 A1 offenbart in diesem Zusammenhang, dass es bevorzugt ist, wenn in der Veresterungsstufe ein Molverhältnis von BD : TPA von 1,1 bis 1,6 eingehalten wird, bei Umsätzen, bezogen auf TPA von etwa 97 %. Die Beispiele dieser europäischen Patentanmeldung zeigen ebenfalls, dass bei der Herstellung von Polybutylenterephthalat bereits in der Veresterungsstufe oligomere Produkte in die Veresterungsreaktoren gebildet werden. Auch die US 4,656,241 und die US 4,780,527 beschreiben Verfahren zur Herstellung von Polybutylenterephthalat, in denen ein relativ kleines Molverhältnis BD : TPA verwendet wird. Die US 4,656,241 beschreibt beispielsweise ein Molverhältnis von 0,4 bis 1,3.

Im Hinblick auf die Vorrichtungen, geeignet zur Herstellung von Polybutylenterephthalat und insbesondere für die Veresterungsstufe, offenbart der Stand der Technik übliche Reaktoren, insbesondere Rührkessel. Die Verwendung derartiger konventioneller Rührkessel ist beispielsweise in den europäischen Anmeldungen EP 0 431 977 A2 und EP 1 189 968 A1 angezeigt. Ähnliche Systeme, die die erste Veresterungsstufe als Rührkessel beschreiben, sind auch in WO 01/00704 A1, WO 02/098947 A1 und DE 101 27 146 A1 offenbart.

Im Hinblick auf die Reaktionsführung der ersten diskontinuierlichen Reaktionsstufe zur Veresterung offenbart die US 4,346,213 schließlich, dass es wichtig ist, dass das Reaktionsprodukt der Veresterungsstufe noch unreagierte Terephthalsäure enthält, etwa 10 bis 30 Gew.-%, um bessere Polymerisationsergebnisse zu erhalten.

Der Stand der Technik offenbart im Zusammenhang mit bekannten kontinuierlichen Herstellungsverfahren von Polybutylenterephthalat, dass die Veresterung in Rührstufen durchzuführen ist, wodurch Veresterungsprodukte mit einem mittleren Polykondensationsgrad von etwa 2 bis 5 erhalten werden können. Der TPA-Umsatz sollte dabei nicht zu hoch sein, da es sich als vorteilhaft herausgestellt hat, wenn noch unreagiertes TPA im Veresterungsprodukt verbleibt, da damit eine Verbesserung der Polykondensationsergebnisse zu erzielen ist. Weiterhin offenbart der oben diskutierte Stand der Technik im Hinblick auf die Veresterungsreaktion sowie im Hinblick auf die Polykondensationsreaktion zur Herstellung von Polybutylenterephthalat, dass Katalysatoren eingesetzt werden, insbesondere Katalysatoren basierend auf organischen Titanverbindungen. Typische Titanverbindungen geeignet für diesen Zweck sind Alkyl-Titanate, wie sie beispielsweise in den internationalen Offenlegungsschriften WO 01/00704 A1 und WO 02/098947 A1 offenbart sind.

Ein Nachteil der konventionellen Herstellungsverfahren für Polybutylenterephthalat ist jedoch, dass die notwendigen, vergleichsweise großen Mengen an Katalysator dazu führen, dass das endgültige Polymerisationsprodukt relativ hohe Anteile an unerwünschten Verbindungen enthält, die durch den Katalysator in das Verfahrensprodukt eingeführt werden. Weiterhin sind die zur Polykondensation eingesetzten Katalysatoren Hydrolyse anfällig, was sich sowohl nachteilig auf die Reaktionsführung als auch auf die Qualität des fertigen Polymers auswirkt. Durch diese Nachteile im Stand der Technik können die folgenden Probleme bei der Herstellung von Polybutylenterephthalat auftreten:

- wachsende Gelbfärbung im Endprodukt (erhöhter b-Wert)
- überlagerte Blaufärbung und Graufärbung
- reduzierter L-Wert
- Tendenz zu einer sekundären photolytischen Vergrauung von Produktoberflächen und einer starken Abnahme des Weißgrades im UV-Licht
- Katalysatorausfällungen
- Polymertrübung
- Gefahr der Rückstandsbildung im Dauerbetrieb

- geminderte Filtrierbarkeit von Produktschmelzen.

Die vorliegende Erfindung stellt sich somit die Aufgabe ein verbessertes Verfahren zur Herstellung von Polybutylenterephthalat anzugeben, wodurch die oben genannten Probleme einzeln, teilweise oder insgesamt überwunden werden.

## Kurze Beschreibung der Erfindung

Die Erfinder der vorliegenden Anmeldung haben überraschenderweise gefunden, dass eine neue Ausgestaltung der Veresterungsstufe es erlaubt, ein verbessertes Verfahren zur Herstellung von Polybutylenterephthalat anzugeben. Die wesentliche Verbesserung trifft dabei die Verfahrensweise in der Veresterungsstufe. Ein neues und erfinderisches Veresterungsverfahren für die Reaktion von TPA mit BD ist erfindungsgemäß in Anspruch 1 definiert. Bevorzugte Ausführungsformen dieses Verfahrens sind in den Ansprüchen 2 bis 8 spezifiziert. Anspruch 9 kennzeichnet das erfindungsgemäße Verfahren zur Herstellung von Polybutylenterephthalat. Die Ansprüche 10 bis 15 definieren bevorzugte Ausführungsformen dieses Verfahrens. Die Ansprüche 16 bis 20 offenbaren schließlich Vorrichtungen geeignet zur Durchführung der erfindungsgemäßen Verfahren.

## Kurze Beschreibung der Figuren

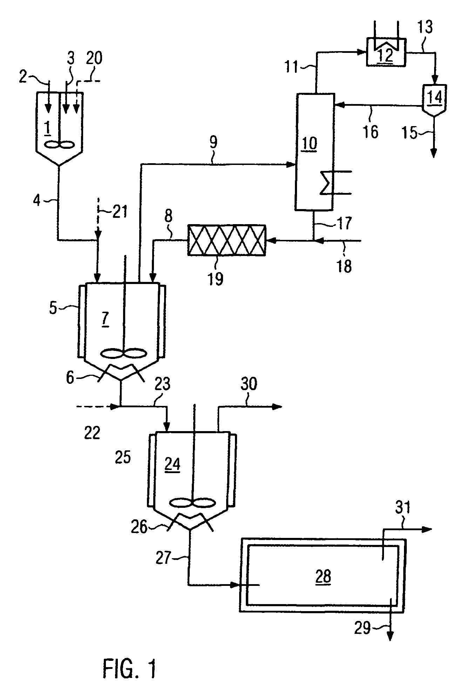

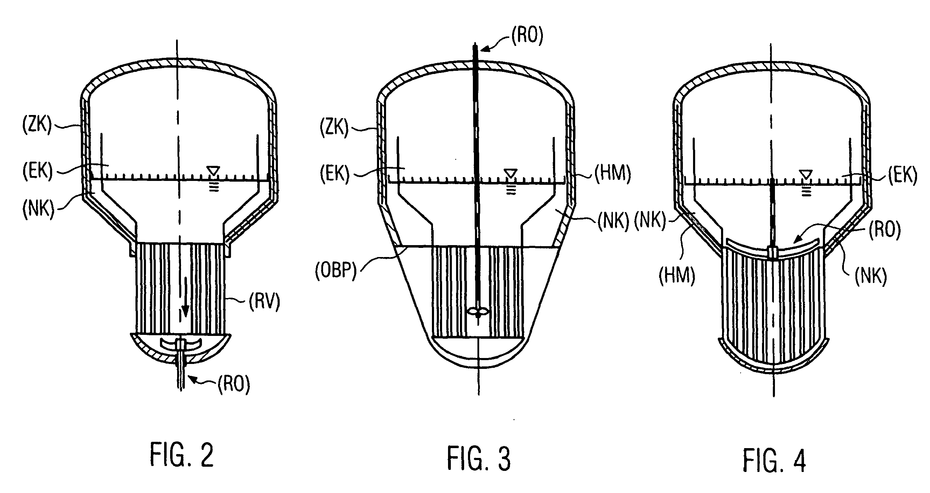

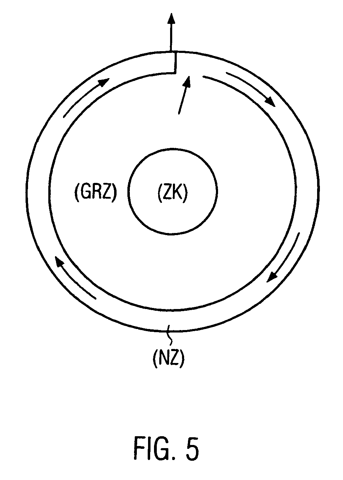

Figur 1 zeigt ein Fließschema eines kontinuierlichen Verfahrens zur Herstellung von Polybutylenterephthalat in Übereinstimmung mit der vorliegenden Erfindung. Die Figuren 2 bis 4 zeigen bevorzugte Ausgestaltungen des erfindungsgemäßen Reaktors für die Veresterungsstufe. Figur 5 zeigt eine schematische Aufsicht auf einen Reaktor in Übereinstimmung mit der vorliegenden Erfindung.

## Detaillierte Beschreibung der Erfindung

Die vorliegende Erfindung ist insbesondere dadurch gekennzeichnet, dass eine neue Verfahrensführung für die Veresterung von TPA und BD bereitgestellt wird. Diese neue Verfahrensführung zeichnet sich dadurch aus, dass die im Stand im Technik beschriebene Reaktionsführung zur Veresterung in einem Rührkessel derart geändert wird, dass in der Veresterung nach einer ersten gerührten Veresterungszone eine Nachlaufzone in der Veresterungsstufe vorgesehen wird, wobei die Nachlaufzone dadurch gekennzeichnet ist, dass die Reaktionsmischung in dieser Nachlaufzone nicht gerührt wird. Durch diese Reaktionsführung wird in der Nachlaufzone Rückvermischung vermieden bzw. unterdrückt. Die einzelnen Schritte der erfindungsgemäßen Veresterung werden im Folgenden detailliert beschrieben.

Zunächst werden die zur Veresterung von TPA und BD notwendigen Komponenten bereitgestellt, also insbesondere die oben genannten Ausgangsprodukte TPA und BD sowie ein üblicher Katalysator, vorzugsweise auf Titanbasis. Der Katalysator wird dabei bevorzugt als Lösung bereitgestellt, vorzugsweise in der Form einer diolischen Lösung, insbesondere wird 1,4-Butandiol als Hauptbestandteil des Lösungsmittels bevorzugt. Die Ausgangsverbindungen TPA und BD können zunächst in eine pastöse Ausgangsmischung mit einem Molverhältnis BD zu TPA von 1.0 bis 1.8 überführt werden, wobei gemeinsam mit dem über die Prozesskolonne zu rezirkulierenden 1,4-Butandiol ein gesamtes Einspeisemolverhältnis 2 bis 4, bevorzugt 2,8 bis 3,8, insbesondere bevorzugt von 3,0 bis 3,5 eingestellt wird. Diese Ausgangsprodukte, d. h. die pastöse Ausgangsmischung sowie die Katalysatorlösung gegebenenfalls in Verbund mit dem rezirkulierten Prozessdiol können dann in geeigneter und üblicher Weise in den Reaktor zur Veresterungsreaktion eingespeist werden. Neben den erfindungsgemäß wesentlichen Komponenten können in die Veresterungsstufe auch geeignete weitere Komponenten eingeführt werden, solange die Veresterungsreaktion dadurch nicht beeinträchtigt wird. Geeignet sind in diesem Zusammenhang insbesondere übliche Zusatzstoffe für das gewünschte Endprodukt, wie Stabilisatoren usw., oder Zusatzkomponenten, die die Reaktionsführung erleichtern. Weiterhin ist es erfindungsgemäß möglich zu den oben genannten Ausgangsstoffen TPA und BD weitere Diolkomponenten und/oder Dicarbonsäurekomponenten zu geben, solange der wesentliche Anteil der Ausgangsmonomere aus TPA und BD besteht. Durch die Zudosierung weiterer Diolkomponenten und/oder Dicarbonsäurekomponenten ist es möglich gemischte Veresterungsprodukte herzustellen, woraus Copolyester in einer nachgeschalteten Kondensation erhalten werden können. Bevorzugt ist jedoch der Einsatz von TPA und BD als Dicarbonsäurekomponente bzw. Diolkomponente.

Die erfindungsgemäße Veresterungsreaktion wird bevorzugt bei Drücken von weniger als Atmosphärendruck durchgeführt. Bevorzugt sind insbesondere Drücke von weniger als 800 mbar, insbesondere bevorzugt von 350 bis 600 mbar, stärker bevorzugt von 400 bis 500 mbar. Die Temperatur der Veresterungsreaktion in Übereinstimmung mit der vorliegenden Erfindung ist bevorzugt höher als 230 °C, insbesondere bevorzugt von 235 bis 250 °C, stärker bevorzugt von 239 bis 246 °C.

Erfindungsgemäß wird die Veresterungsreaktion vorzugsweise weiterhin derart gesteuert, dass der mittlere Polykondensationsgrad ($P_n$) größer als 3 ist, stärker bevorzugt größer als 3,5, insbesondere bevorzugt von 5 bis 6. Der TPA-Umsatz beträgt bevorzugt mehr als 97,5 %, stärker bevorzugt mehr als 98 %; insbesondere bevorzugt sind 99,0 % bis 99,7 %.

Die durchschnittliche Verweilzeit ($t_R$) der Ausgangskomponenten in der Veresterungsreaktion beträgt vorzugsweise weniger als 2,5 Stunden, stärker bevorzugt weniger als 2,3 Stunden; insbesondere bevorzugt sind 1,7 bis 2,25 Stunden.

Wie bereits vorstehend ausgeführt, ist die Veresterungsreaktion in Übereinstimmung mit der vorliegenden Erfindung dadurch gekennzeichnet, dass nach einer gerührten ersten Reaktionszone eine Nachlaufzone ohne Rührung vorgesehen ist. Im Hinblick auf die oben angegebene Reaktionszeit (mittlere Verweilzeit) ist bevorzugt, dass die Nachlaufphase mindestens 5 % der Gesamtzeit ausmacht, vorzugsweise 7 bis 15 % der gesamten Veresterungszeit, stärker bevorzugt 8 bis 14 %.

Erfindungsgemäß ist es im kontinuierlichen stationären Verfahren bevorzugt, wenn die erfindungsgemäße isobare zweistufige Reaktionsführung derart ausgestaltet wird, dass nach einer gerührten Reaktionszone eine rührfreie Nachlaufzone vorgesehen wird. Erfindungsgemäß ist es insbesondere bevorzugt, wenn in der Nachlaufzone, in der kein Rühren stattfindet, eine Pfropfenströmung realisiert wird.

Das erfindungsgemäße Verfahren lässt sich bevorzugt kontinuierlich durchführen, wobei die Ausgangsprodukte zunächst in geeigneter Weise (siehe beispielsweise die beiden oben genannten internationalen Anmeldungen) in die erste Reaktionszone eingebracht werden. Durch geeignete Prozessführung, die dem Fachmann im Prinzip bekannt ist, wird sichergestellt, dass die eingebrachten Ausgangskomponenten nach der gewünschten Reaktionszeit aus dem Reaktor ausgetragen werden. Durch entsprechende Dimensionierung des Reaktors, umfassend die gerührte erste Reaktionszone sowie die nicht gerührte Nachlaufzone, ist weiterhin die erfindungsgemäße, vorteilhafte Verweilzeitaufteilung zwischen gerührter Reaktionszone und nichtgerührter Nachlaufzone sichergestellt. Besonders bevorzugt ist es in diesem Zusammenhang, wenn die Nachlaufzone mindestens 5 Vol.-% des gesamten für die Veresterungsreaktion zur Verfügung stehenden Volumens ausmacht, insbesondere 7 bis 15 Vol.-% und stärker bevorzugt 8 bis 14 Vol.-% des gesamten Reaktionsvolumens.

Im Hinblick auf die Reaktionsführung in der Nachlaufzone ist wesentlich, dass hier kein Rühren mehr stattfindet, so dass Rückvermischung soweit wie möglich ausgeschlossen wird. Dadurch kann erfindungsgemäß ein sehr hoher Umsatz, bezogen auf TPA erreicht werden. Außerdem kann hierbei noch eine zusätzliche Einspeisung von BD stattfinden. Geeignete Mengen an BD für eine derartige Einspeisung in die Nachlaufzone betragen, bezogen auf die ursprünglich eingespeiste TPA bis zu 10 Mol-%.

Weiterhin ist es bevorzugt, wenn in der Nachlaufzone flüchtige Bestandteile, insbesondere Wasser und gegebenenfalls BD, dem Reaktionsgemisch entzogen werden. Bevorzugt ist hier eine Reduktion der verdampfbaren Produktbestandteile, insbesondere Wasser und BD, auf etwa 30 bis 60 % der Konzentration in der gerührten Reaktionszone. Dazu ist es auch möglich die Reaktionstemperatur während der Nachlaufphase im Vergleich zu der gerührten Reaktionsphase zu erhöhen.

Erfindungsgemäß wird durch die Veresterungsstufe in Übereinstimmung mit der vorliegenden Anmeldung ein homogenes Veresterungsprodukt aus TPA und BD erhalten, mit einem TPA-Umsatz von größer als 98 %, bei einem mittleren Polykondensationsgrad von mehr als 3. Die oben im Zusammenhang mit der Reaktionsführung erläuterten bevorzugten Ausführungsformen, insbesondere im Hinblick auf TPA-Umsatz und Polymerisationsgrad gelten für das am Ende der Veresterungsreaktion erhaltene Produkt.

Mit der Homogenität und Gasfreiheit des Veresterungsproduktes werden erfindungsgemäß eine stabile Durchsatzkontrolle und ein stationärer Durchsatz beim kontinuierlichen Gesamtprozess erreicht.

Dieses Produkt kann insbesondere zur Herstellung von Polybutylenterephthalat verwendet werden, bevorzugt in Übereinstimmung mit einer konventionellen Verfahrensführung, wie oben im Zusammenhang mit dem Stand der Technik beschrieben. Eine derartige konventionelle Reaktionsführung umfasst, anschließend an die Veresterungsstufe, noch eine erste und eine zweite Kondensationsstufe, d. h. die Vorkondensation und die Polykondensation.

Erfindungsgemäß ist es in diesem Zusammenhang bevorzugt, wenn der Druck in den weiteren Kondensationsstufen weiter verringert wird, wobei in der ersten Kondensationsstufe (Vorkondensation) bevorzugt Drücke von 5 bis 50 mbar, insbesondere bevorzugt 10 bis 25 mbar eingehalten werden. Für die abschließende zweite Kondensationsstufe (Polykondensation) wird der Druck bevorzugt auf 0,5 bis 2,0 mbar, insbesondere bevorzugt 0,7 bis 1,3 mbar abgesenkt. Im Hinblick auf die Reaktionstemperaturen sind übliche Prozesseinstellungen geeignet. Bevorzugt beträgt die Temperatur während der Vorkondensation jedoch 235 bis 245 °C, stärker bevorzugt 238 bis 242 °C, während die Temperatur während der Polykondensation 240 bis 250 °C beträgt, stärker bevorzugt 242 bis 248 °C. Die mittlere Verweilzeit beträgt für die Vorkondensation bevorzugt 30 bis 70 Minuten, stärker bevorzugt 40 bis 60 Minuten und für die Polykondensation 100 bis 170 Minuten, stärker bevorzugt 120 bis 150 Minuten. Die Vorkondensation und die Polykondensation können in geeigneter Weise in üblichen Reaktoren durchgeführt werden. Derartige Reaktoren sind dem Fachmann bekannt und für die Vorkondensation beispielsweise in der WO 2004/033526 und in der DE 102004038466 beschrieben. Im Fall der Polykondensation gilt beispielsweise die Beschreibung in DE1745541 und DE102004053199.

Erfindungsgemäß ist es in diesem Zusammenhang insbesondere bevorzugt, wenn sich an die Nachlaufzone der Veresterung eine ebenfalls nicht gerührte Einlaufzone in der Vorkondensation anschließt. Diese Einlaufzone macht bevorzugt mindestens 25 %, vorzugsweise 35 bis 65 % der Vorpolykondensationszeit aus.

Erfindungsgemäß lässt sich so Polybutylenterephthalat in guter Ausbeute und zufriedenstellender Reaktionszeit herstellen. Überraschenderweise hat sich gezeigt, dass sich durch die spezielle Reaktionsführung in der Veresterung die Menge an Katalysator, insbesondere Titankatalysator, benötigt für die gesamte Reaktion, deutlich verringert. Dies vermindert auch die im Zusammenhang mit dem Katalysatoreinsatz auftretenden und oben diskutierten Probleme. So kann insbesondere die Produktqualität gesteigert und die Verfahrensführung vereinfacht werden. Durch den verringerten Bedarf an Katalysator erhöhen sich beispielsweise die Filterstandszeiten um mehr als 50 %. Durch den geringeren Bedarf an Katalysator werden weiterhin die Kosten für die Herstellung von Polybutylenterephthalat gesenkt. Katalysator bedingte Qualitätseinbußen, wie Farbdefizite und photolytische Vergrauung werden erfindungsgemäß ebenfalls verringert.

Eine derartige Verbesserung der Reaktionsergebnisse konnte aufgrund der Informationen im Stand der Technik nicht erwartet werden.

Erfindungsgemäß ist es besonders bevorzugt, wenn die gesamte benötigte Katalysatormenge für die Herstellung von Polybutylenterephthalat bereits der Veresterungsstufe zugeführt wird. Dies vereinfacht insbesondere auch den apparativen Aufwand sowie den Aufwand im Hinblick auf die Verfahrensführung für die nachfolgenden Stufen der Vorkondensation und Polykondensation. Wie bereits oben ausgeführt, kann durch die erfindungsgemäße Verfahrensausgestaltung der ersten Stufe der Gesamtkatalysatorbedarf für die Herstellung von Polybutylenterephthalat deutlich gesenkt werden. Erfindungsgemäß wurde festgestellt, dass der Katalysatorbedarf mit steigendem TPA-Umsatz $\alpha$ bzw. fallendem Restsäureanteil s = 100 - $\alpha$ abnimmt. Durch den verringerten Katalysatoreinsatz erfolgt ein Rückgang des Gelbwert b und eine Steigerung des Weißgrades der hergestellten polymeren Produkte.

Die Katalysatorkomponente die erfindungsgemäß bevorzugt in Form einer diolischen Lösung in die Reaktion eingebracht wird, umfasst bevorzugt zusätzlich stabilisierende Komponenten. Insbesondere ist eine Stabilisierung der Katalysatorlösung mit TPA bevorzugt.

Ein erfindungsgemäßes Verfahren zur Herstellung von Polybutylenterephthalat wird im Folgenden unter Verweis auf die Figur 1 beschrieben.

Einem Rührbehälter (1) werden über Leitung (2) TPA und über Leitung (3) BD zugeführt und zu einer Paste gemischt, die über Leitung (4) in einem mit einem Heizmantel (5) umgebenen und mit einem zusätzlichen Heizelement (6) ausgerüsteten Rührreaktor (7) zur Veresterung eingespeist wird. Bei der Veresterung entstehen ein flüssiges BD-Oligomeren-Gemisch und Dampf, wobei letzterer im wesentlichen Wasser, BD und Tetrahydrofuran (THF) umfasst. Die Veresterung im Rührreaktor (7) erfolgt in Gegenwart der über Leitung (8) zugeführten Katalysatorlösung. Der im Rührreaktor (7) gebildete Dampf verlässt über Leitung (9) den Rührreaktor (7) und wird der Destillationskolonne (10) zugeführt, in der Wasser und THF über Kopf abgetrennt werden. Das Kopfprodukt der Destillationskolonne (10) wird über Leitung (11) dem Kühler (12) zugeführt, aus dem das Kondensat über Leitung (13) zum Rücklaufverteiler (14) läuft. Aus dem Rücklaufverteiler (14) werden Wasser und THF über Leitung (15) abgezogen und der Rücklauf über Leitung (16) zum Kopf der Destillationskolonne (10) zurückgeführt. Aus dem Sumpf der Destillationskolonne wird über Leitung (17) ein aus überwiegend Butandiol bestehendes Gemisch abgezogen. Über Leitung (18) wird dem in Leitung (17) strömenden Gemisch Alkyltitanat zudosiert, womit eine für die Katalysatorlösung gewünschte Zusammensetzung entsteht. Das Gemisch durchläuft eine Mischstrecke (19) und über Leitung (8) gelangt dann die fertige Katalysatorlösung in den Rührreaktor (7). Die Katalysatorlösung kann ganz oder teilweise auch über Leitung (20) dem Rührbehälter (1) aufgegeben und/oder über Leitung (21) in die Leitung (4) dem Pastenstrom und/oder über Leitung (22) in die Transferleitung (23) für das aus dem Rührreaktor (7) entstandene Veresterungsprodukt zum Vorkondensationsreaktor (24) eingespeist werden. Der Reaktor (24) besitzt einen Heizmantel (25) und ein zusätzliches Heizelement (26). Über Leitung (27) wird das aus dem Reaktor (24) stammende Vorkondensat dem Polykondensationsreaktor (28) zugeführt. Das erzeugte PBT wird über Leitung (29) abgepumpt. Über Leitung (30) werden die gebildeten Dämpfe aus dem Reaktor (24) und über Leitung (31) aus dem Reaktor (28) abgesaugt. Erfindungsgemäß umfasst der Reaktor (7) zusätzlich zur angedeuteten gerührten Reaktionszone eine nicht gerührte Nachlaufzone. Beispiele derartiger Reaktoren sind in den Figuren 2 bis 4 offenbart.

Die erfindungsgemäße Reaktionsführung ermöglicht mit der Einschaltung der nicht gerührten Nachlaufzone der Veresterungsstufe eine Verringerung des Katalysatoreinsatzes. Durch die erfindungsgemäße Verfahrensführung werden dabei hohe Umsätze an TPA erreicht, die deutlich über dem Stand der Technik als geeigneten Umsätzen liegen. Überraschenderweise hat sich erfindungsgemäß gezeigt, dass es nicht nachteilig ist, einen sehr hohen TPA-Umsatz am Ende der Veresterungsstufe zu erhalten. Der hohe TPA-Umsatz, in Kombination mit dem erfindungsgemäß einzuhaltenden Mol-Verhältnis von BD zu TPA sichert eine Stabilisierung und gegebenenfalls eine Reaktivierung von Katalysatoranteilen, die im Stand der Technik durch Hydrolyse zu schädlichen Abbauprodukten umgesetzt werden. Durch die erfindungsgemäße Verfahrensführung kann insbesondere in der Nachlaufzone der Veresterungsstufe und in der Einlaufzone der Vorkondensation eine Reaktivierung von Katalysatorkomponenten erreicht werden, da die Oxidationsstufe des Katalysatormetalls beibehalten und die Bildung von zur Ausfällung neigenden Hydroxide verhindert werden kann. In diesem Zusammenhang ist insbesondere die weitere Entfernung von flüchtigen Bestandteilen in der Nachlaufzone vorteilhaft, da bei verringertem Wassergehalt der Veresterungsgemisches und einem erhöhten molaren Verhältnis von BD zu Wasser eine verringerte Neigung zur Katalysatorhydrolyse zu beobachten ist.

Ein erfindungsgemäßer Reaktor zur Durchführung der oben beschriebenen Veresterungsreaktion umfasst einen Veresterungsreaktor mit einer vertikalen Behälterachse, einem beheizbaren Mantel, einer zentralen Eingangskammer mit separaten Anschlüssen zur Einspeisung der Rohstoffe als Paste und des Katalysators als diolische Lösung, ein koaxiales Rührwerk zur Dispergierung der Einsatzstoffe und ein abgetauchtes Heizregister zur Übertragung der benötigten Prozesswärme. Der erfindungsgemäße Reaktor beinhaltet weiterhin eine Nachlaufzone, vorzugsweise eine periphere Nachlaufkammer, insbesondere geeignet für eine Nachlösung fester TPA aus der Eingangskammer und die Homogenisierung des Veresterungsgemisches bei rückmischungsarmer Strömung unter isobaren Bedingungen. Erfindungsgemäß wird eine geeignete Nachlaufzone, insbesondere dadurch realisiert, dass die Eintrittskammer oberhalb des Heizregisters von einem radial erweiterten, nach oben offenen Innenbehälter umschlossen ist und die Nachlaufzone zwischen dem Innenbehälter und der äußeren beheizten Behälterwand als Ringkanal mit nach oben offener Verbindung zum gemeinsamen Dampfraum ausgeführt ist.

Die Kanaltiefe für die Nachlaufzone beträgt vorzugsweise weniger als 800 mm, stärker bevorzugt 700 mm oder weniger und insbesondere bevorzugt 350 mm bis 700 mm.

In Figur 2 ist ein erfindungsgemäßer Veresterungsreaktor gezeigt. Dieser Reaktor umfasst einen Robertverdampfer (RV) und ein bodenseitiges, radialförderndes Rührorgan (RO). Oberhalb des Verdampfers erweitert sich der Reaktionsraum konisch bis zu einem zylindrischen Kopfbereich (ZK). Ein radial erweiterter Innenbehälter, bestehend aus einem anfänglichen Konus (über dem unten liegenden äußeren Reaktorkonus) und einem randständigen zylindrischen Bord am äußeren Konusende, teilt den Reaktor in eine innere, zentrale Eintrittskammer (EK) und eine äußere Nachlaufkammer (NK) in Form eines konusseitig schrägen Ringkanals mit zylindrischen nach oben offenem Entgasungsspalt an der Reaktorwand. Die produktberührten Wände sind von einem äußeren Heizmantel umgeben. Der innere Bereich ist mit dem bodenseitigen radial fördernden Rührelement der Raum für die gerührte Zone der Veresterung, während die Nachlaufkammer die nicht gerührte Nachlaufzone darstellt.

In Figur 3 ist ein alternatives Konzept offenbart, bei dem die obere Bodenplatte (OBP) des Verdampfers im Rahmen der radialen Erweiterung des Reaktorraums zugleich die untere Begrenzungswand der äußeren Nachlaufzone bildet. Von dieser Bodenplatte geht der zunächst konische, dann zylindrische Innenbehälter, der den Reaktionsraum in eine zentrale Innenkammer und eine äußere, randgängige Nachlaufkammer teilt, aus. Ein Propellerrührwerk (RO) im senkrechten Fallrohr des Heizregisters dient der Produktumwälzung und verbesserten Rohstoffverteilung in der ersten Zone.

Figur 4 zeigt schließlich ein weiteres abgewandeltes Reaktorkonzept mit einem birnenartigen Reaktorbehälter und einen in den verjüngten Bodenraum des Reaktors abgelassenes Heizregisters mit separatem Mantel und nach unten gewölbten Bodenplatten. Zwischen den bodenseitigen Behältermantel und dem Registermantel befindet sich ein freier Spalt für eine äußere Fallströmung des Produkts, korrespondierend zu einer senkrechten Aufströmung in den Heizrohren. Ein nach oben förderndes Rührwerk (RO) über dem oberen Rohrboden dient der direkten Einmischung und Dispergierung der von oben in die zentrale Eintrittskammer gespeisten Einsatzstoffe. Die Gliederung des oberen Reaktionsraumes in die zentrale Eintrittskammer (EK) und eine periphere Nachlaufkammer (NK) in Form eines äußeren Ringkanals ist ähnlich der bereits in Figur 2 beschriebenen Anordnung ausgestaltet.

In Figur 2 bis 4 ist weiterhin der Befüllstand angegeben. Unter der Linie (⊥⊥⊥) befindet sich die (flüssige) Reaktionsmischung, darüber befindet sich der Dampfraum, gegebenenfalls zusammen mit etwas Schaum.

Figur 5 schließlich zeigt eine schematische Aufsicht auf einen Reaktor in Übereinstimmung mit der vorliegenden Erfindung, mit einer innen liegenden gerührten Reaktionszone (GRZ) und einer außen umlaufenden Nachlaufzone (NZ), sowie einen zentralen Kanal, z. B. zur Anbringung (ZK) eines Rührorgans.

Ein derartiger Reaktor zur Veresterung kann mit weiteren bekannten Vorrichtungen zur Vorkondensation und Polykondensation verbunden werden. Das erfindungsgemäß insbesondere bevorzugte apparative Konzept der Fortführung der nicht gerührten Nachlaufzone der Veresterung in eine Einlaufzone der Vorkondensation wurde bereits vorstehend beschrieben. Das apparative Konzept der Vorpolykondensationsstufe als Abfolge mindestens eines Etagenbodens und einem gerührten Austragssumpf ist bereits in der EP 1 478 677 beschrieben, die hier durch Verweis mit erfasst ist. Die Strömungskanäle sind dabei bevorzugt selbst entleerend und totraumfrei ausgestaltet, wie in der deutschen Patentanmeldung DE 10 2004 38 466.5 beschrieben. Auch diese Anmeldung ist hier durch Verweis mit umfasst.

Als Endreaktor für die Polykondensation des Vorkondensats können alle für diesen Zweck geeigneten und dem Fachmann bekannten Reaktortypen verwendet werden, wie insbesondere Rührscheibenreaktoren oder Käfigreaktoren, bevorzugt Rührscheibenreaktoren.

**Beispiel und Vergleichsbeispiel**

Der in der Anmeldung genannte Polykondensationsgrad, der beispielsweise im Zusammenhang mit der Veresterung beschrieben wird, kann in Übereinstimmung mit den folgenden Ausführungen bestimmt werden.

Die Säurezahl (AN = acid number) wird gemessen in mg KOH pro Gramm eingewogenes Veresterungsprodukt. Die nicht reagierten Säureendgruppen des in Dimethylformamid gelösten Produktes werden mittels Titration mit alkoholischer KOH aus der Differenz zu einer Blindprobe bestimmt.

Die Verseifungszahl (SN = saponification number) wird ebenfalls in mg KOH pro Gramm eingewogenes Veresterungsprodukt gemessen. Dabei wird das Veresterungsprodukt mit kochender, alkoholischer KOH umgesetzt und die verbleibende KOH titrimetrisch bestimmt.

Da das eingewogene Veresterungsprodukt auch freies Diol, Wasser und nicht reagierende Additive enthält, muss deren Massenanteil (ADD) ebenfalls bestimmt werden.

Die Verseifungszahl entspricht der gesamten eingesetzten Menge an Säureendgruppen während die Säurezahl die noch nicht reagierten Säureendgruppen darstellt. Daher ergibt sich der TPA-Umsatz e zu:

$$e = 1 - \frac{AN}{SN}$$

Den Polykondensationsgrad bzw. die mittlere Kettenlänge des PBT-Veresterungsproduktes kann man aus SN, AN und ADD mit Hilfe folgender Formel berechnen:

$$p_n = \frac{1}{1245.118 \cdot \dfrac{1 - ADD}{SN} + 1.6 \cdot \dfrac{AN}{SN} - 2.44362}$$

Ausführungsbeispiel:

In einer kontinuierlichen Polykondensationsanlage mit einer Veresterungsstufe (ES) ähnlich wie in Fig. 2, einer Vorkondensation (Prepolystufe (PP)), ausgestattet mit einer Einlaufkammer von 15 min Verweilzeit, und einer Polykondensationsstufe mit einem Ringscheibenreaktor (DRR) wurden folgende Parameter eingestellt:

|  |  | ES | PP | DRR |
|---|---|---|---|---|
| Druck | mbar | 450 | 16 | 1 |
| Temperatur | °C | 245 | 244 | 244 |
| Verweilzeit | min | 130 | 40 | 125 |

Die Veresterung wurde mit einem Einspeise-Molverhältnis BD zu TPA von 3.3 betrieben, die Verweilzeit in der Nachlaufzone betrug 12 min, die Kanaltiefe war 560 mm, der eingesetzte Katalysator betrug 60 ppm im Endprodukt.
In der Veresterung ergab sich ein Umsatz von 99.6% und ein Polykondensationsgrad von 6, das Endprodukt mit eine intrinsischen Viskosität von 0.95 hatte einen Farbwert b von 1.2. In der ersten gerührten Zone der Veresterung wurde ein Umsatz von 97.9% erzielt. Die Anlage war mit einem Prepolyfilter ausgerüstet, der unter den genannten Bedingungen eine mittlere Standzeit von 5-6 Wochen hatte.

Vergleichsbeispiel:

In der gleichen Anlage, jedoch ohne Nachlaufzone in der Veresterungsstufe, wurde mit folgenden Parametern gefahren:

|  |  | ES | PP | DRR |
|---|---|---|---|---|
| Druck | mbar | 400 | 33 | 1 |
| Temperatur | °C | 245 | 248 | 250 |
| Verweilzeit | min | 110 | 60 | 150 |

Das Einspeise-Molverhältnis war 2.9 und der eingesetzte Katalysator betrug 90 ppm. In der Veresterung ergab sich ein Umsatz von 97.8% mit einem Polykondensationsgrad von 4.7, das Endprodukt hatte eine intrinsische Viskosität von 0.93 mit einem Farbwert b von 3. Die erwartete Filterstandzeit betrug in diesem Fall lediglich 3 - 4 Wochen.

Laborversuche in einem einfachen Rührbehälter mit 60 bis 90 min Verweilzeit, bei Temperaturen von 240 bis 248 °C und Drücken von 400 bis 500 mbar ergaben schwankende Umsätze zwischen 95% und 98% selbst bei hohen Katalysatorkonzentrationen von 120 ppm bis 250 ppm.

Erst durch den hohen Vorumsatz in der gerührten Zone verbunden mit dem Einsatz der Nachlaufzone konnte der Umsatz auf über 99% gesteigert werden. Dabei sank gleichzeitig die benötigte Katalysatormenge, die Farbe des Endproduktes verbesserte sich deutlich und die Filterstandzeiten verlängerten sich. Somit zeigen diese Beispiele, dass die in der Anmeldung beschriebenen Vorteile durch die neue und erfinderische technische Lehre der vorliegenden Anmeldung realisiert werden können.

**Patentansprüche**

1. Verfahren zur kontinuierlichen Veresterung von Terephthalsäure mit 1,4-Butandiol, **dadurch gekennzeichnet, dass** Terephthalsäure und 1,4-Butandiol in einer zweistufigen isobaren Reaktionsführung miteinander reagiert werden, umfassend eine erste, gerührte Reaktionszone und eine zweite, nicht gerührte Nachlaufzone.

2. Verfahren nach Anspruch 1, bei dem das Reaktionsprodukt der Veresterungsreaktion einen Säureumsatz, bezogen auf Terephthalsäure, von mehr als 98 % aufweist.

3. Verfahren nach Anspruch 1 oder 2, bei dem das Reaktionsprodukt der Veresterungsreaktion einen mittleren Polykondensationsgrad von mehr als 3 aufweist.

4. Verfahren nach einem der Ansprüche 1 bis 3, bei dem die zweite Reaktionszone, die nicht gerührte Nachlaufzone, mindestens 5 % der gesamten Reaktionszeit der Veresterungsreaktion beinhaltet.

5. Verfahren nach einem der Ansprüche 1 bis 4, bei dem für die Veresterung eine mittlere Verweilzeit $t_R$ von weniger als 2,5 Stunden eingehalten wird.

6. Verfahren nach einem der Ansprüche 1 bis 5, bei dem ein Veresterungskatalysator in Form einer diolischen Lösung eingesetzt wird.

7. Verfahren nach Anspruch 6, bei dem der Veresterungskatalysator ein auf Titan basierender Katalysator ist.

8. Verfahren zur kontinuierlichen Herstellung von Polybutylenterephthalat, umfassend die Reaktionsstufen Veresterung, Vorkondensation und Polykondensation, wobei die Veresterung in Übereinstimmung mit einem der Ansprüche 1 bis 7 ausgestaltet ist.

9. Verfahren nach Anspruch 8, bei dem die gesamte zur Herstellung von Polybutylenterephthalat benötigte Katalysatormenge in der Veresterungsstufe zugegeben wird.

10. Verfahren nach einem der Ansprüche 8 oder 9, bei dem die nicht gerührte Nachlaufzone der Veresterung direkt in eine ungerührte Einlaufzone der Vorkondensation übergeht.

11. Verfahren nach einem der Ansprüche 8 bis 10, bei dem der Druck in der Vorkondensation geringer ist als der Druck in der Veresterung und wobei der Druck in der Polykondensation geringer ist als der Druck in der Vorkondensation.

12. Verfahren nach einem der Ansprüche 8 bis 11, bei dem der Druck in der Vorkondensation geringer als 50 mbar ist.

**13.** Verfahren nach einem der Ansprüche 8 bis 12, wobei die Temperatur in der Vorkondensation gleich oder geringer ist als die Temperatur während der Polykondensation.

**14.** Verfahren nach einem der Ansprüche 8 bis 13, wobei die Polykondensation in einem Rührscheibenreaktor durchgeführt wird.

**15.** Veresterungsreaktor, geeignet zur Durchführung des Verfahrens nach einem der Ansprüche 1 bis 7, umfassend einen Rührkessel sowie eine nicht gerührte Nachlaufzone, wobei die Nachlaufzone als radial außenliegender Ringkanal um einen gerührten Innenbehälter angeordnet ist.

**16.** Reaktor nach Anspruch 15, wobei die Nachlaufzone sowie der gerührte Innenbehälter einen gemeinsamen Dampfraum aufweisen.

**17.** Reaktor nach einem der Ansprüche 15 und 16, wobei die als Ringkanal ausgestaltete Nachlaufzone eine Kanaltiefe von 300 bis 700 mm aufweist.

**18.** Vorrichtung zur Herstellung von Polybutylenterephthalat, umfassend mindestens einen Veresterungsreaktor, mindestens einen Vorkondensationsreaktor und mindestens einen Polykondensationsreaktor, wobei der mindestens eine Veresterungsreaktor ausgewählt ist unter Reaktoren in Übereinstimmung mit den Ansprüchen 15 bis 17.

**19.** Vorrichtung nach Anspruch 18, wobei der mindestens eine Polykondensationsreaktor ein Rührscheibenreaktor ist.


**Claims**

**1.** Method for the continuous esterification of terephtalic acid with 1,4-butanediol, **characterised in that** terephtalic acid and 1,4-butanediol are reacted in a two-stage isobaric reaction procedure, comprising a first, stirred reaction zone and a second, non-stirred follow-up zone.

**2.** Method according to claim 1, wherein the reaction product of the esterification reaction comprises an acid turnover, based on terephtalic acid, of more than 98%.

**3.** Method according to claim 1 or 2, wherein the reaction product of the esterification reaction comprises a mean polycondensation degree of more than 3.

**4.** Method according to one of claims 1 to 3, wherein the second reaction zone, the non-stirred follow-up zone, contains at least 5% of the complete reaction time of the esterification reaction.

**5.** Method according to one of claims 1 to 4, wherein for the esterification a mean residence time $t_R$ of less than 2.5 hours is observed.

**6.** Method according to one of claims 1 to 5, wherein an esterification catalyst in the form of a diolic solution is employed.

**7.** Method according to claim 6, wherein the esterification catalyst is a catalyst based on titanium.

**8.** Method for the continuous manufacture of polybutylene terephtalate, comprising the reaction stages of esterification, precondensation and polycondensation, wherein the esterification is designed in conformity with one of claims 1 to 7.

**9.** Method according to claim 8, wherein the complete amount of catalyst required for the manufacture of polybutylene terephtalate is added in the esterification stage.

**10.** Method according to one of claims 8 or 9, wherein the non-stirred follow-up zone of esterification directly passes over into a non-stirred inlet zone of the precondensation.

**11.** Method according to one of claims 8 to 10, wherein the pressure in the precondensation is lower than the pressure in the esterification and wherein the pressure in the polycondensation is lower than the pressure in the precondensation.

**12.** Method according to one of claims 8 to 11, wherein the pressure in the precondensation is lower than 50 mbar.

**13.** Method according to one of claims 8 to 12, wherein the temperature in the precondensation is equal to or lower than the temperature during polycondensation.

**14.** Method according to one of claims 8 to 13, wherein the polycondensation is performed in a stirring disk reactor.

**15.** Esterification reactor, appropriate for performing the method according to one of claims 1 to 7, comprising a stirred tank reactor as well as a non-stirred follow-up zone, wherein the follow-up zone is arranged around a stirred internal container as ring channel radially disposed outside.

**16.** Reactor according to claim 15, wherein the follow-up zone as well as the stirred internal container comprise a common steam room.

**17.** Reactor according to one of claims 15 and 16, wherein the follow-up zone designed as ring channel has a channel depth of 300 to 700 mm.

**18.** Device for the manufacture of polybutylene terephtalate, comprising at least one esterification reactor, at least one precondensation reactor and at least one polycondensation reactor, wherein the at least one esterification reactor is selected from reactors in conformity with claims 15 to 17.

**19.** Device according to claim 18, wherein the at least one polycondensation reactor is a stirring disk reactor.

**Revendications**

**1.** Procédé pour l'estérification en continu de l'acide téréphtalique avec le 1,4-butanediol, **caractérisé en ce que** l'acide téréphtalique et le 1,4-butanediol sont mis en réaction avec une conduite isobare biétagée de la réaction, comprenant une première zone de réaction agitée et une deuxième zone, de queue, non agitée.

**2.** Procédé selon la revendication 1, dans lequel le produit de la réaction d'estérification présente un degré de conversion de l'acide, rapporté à l'acide téréphtalique, de plus de 98 %.

**3.** Procédé selon la revendication 1 ou 2, dans lequel le produit de la réaction d'estérification présente un degré de polycondensation moyen de plus de 3.

**4.** Procédé selon l'une quelconque des revendications 1 à 3, dans lequel la deuxième zone de réaction, la zone de queue non agitée, contient au moins 5 % du temps de réaction total de la réaction d'estérification.

**5.** Procédé selon l'une quelconque des revendications 1 à 4, dans lequel un temps de séjour moyen $t_R$ de moins de 2,5 heures est observé pour l'estérification.

**6.** Procédé selon l'une quelconque des revendications 1 à 5, dans lequel est utilisé un catalyseur d'estérification sous forme d'une solution diolique.

**7.** Procédé selon la revendication 6, dans lequel le catalyseur d'estérification est un catalyseur se basant sur le titane.

**8.** Procédé pour la production en continu de téréphtalate de polybutylène, comprenant les étapes de réaction estérification, précondensation et polycondensation, dans lequel l'estérification est agencée selon l'une quelconque des revendications 1 à 7.

**9.** Procédé selon la revendication 8, dans lequel l'ensemble de la quantité de catalyseur nécessitée à la production du téréphtalate de polybutylène est ajoutée dans l'étape d'estérification.

**10.** Procédé selon la revendication 8 ou 9, dans lequel la zone de queue non agitée de l'estérification se prolonge directement par une zone d'entrée non agitée de la précondensation.

**11.** Procédé selon l'une quelconque des revendications 8 à 10, dans lequel la pression dans la précondensation est plus faible que la pression dans l'estérification, et dans lequel la pression dans la polycondensation est plus faible que la pression dans la précondensation.

12. Procédé selon l'une quelconque des revendications 8 à 11, dans lequel la pression dans la précondensation est inférieure à 50 mbar.

13. Procédé selon l'une quelconque des revendications 8 à 12, dans lequel la température dans la précondensation est égale ou inférieure à la température pendant la polycondensation.

14. Procédé selon l'une quelconque des revendications 8 à 13, dans lequel la polycondensation est effectuée dans un réacteur à disques agitateurs.

15. Réacteur d'estérification, approprié à l'exécution du procédé selon l'une quelconque des revendications 1 à 7, comprenant une cuve agitée ainsi qu'une zone de queue non agitée, dans lequel la zone de queue est disposée comme canal annulaire disposé radialement à l'extérieur autour d'une cuve intérieure agitée.

16. Réacteur selon la revendication 15, dans lequel la zone de queue ainsi que la cuve intérieure agitée présentent un espace de vapeur commun.

17. Réacteur selon l'une quelconque des revendications 15 et 16, dans lequel la zone de queue configurée comme canal annulaire présente une profondeur de canal de 300 à 700 mm.

18. Dispositif pour la production de téréphtalate de polybutylène, comprenant au moins un réacteur d'estérification, au moins un réacteur de précondensation et au moins un réacteur de polycondensation, dans lesquels ledit au moins un réacteur d'estérification est choisi parmi les réacteurs en accord avec les revendications 15 à 17.

19. Dispositif selon la revendication 18, dans lequel ledit au moins un réacteur de polycondensation est un réacteur à disques agitateurs.

FIG. 1

FIG. 4

FIG. 3

FIG. 2

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6590062 B2
- US 6359106 B1
- US 4680376 A
- US 5015759 A
- EP 0869141 A1
- US 4656241 A
- US 4780527 A
- EP 0431977 A2
- EP 1189968 A1
- WO 0100704 A1

- WO 02098947 A1
- DE 10127146 A1
- US 4346213 A
- WO 2004033526 A
- DE 102004038466
- DE 1745541
- DE 102004053199
- EP 1478677 A
- DE 10200438466